# EUROPÄISCHE PATENTSCHRIFT

(11) **EP 2 145 170 B1**
(45) Veröffentlichungstag und Bekanntmachung des Hinweises auf die Patenterteilung: **23.08.2017**
(21) Anmeldenummer: 08716821.7
(22) Anmeldetag: 13.02.2008
(51) Int. Cl.: G01N 9/00, G01N 11/16

(54) **VERFAHREN ZUR BESTIMMUNG UND/ODER ÜBERWACHUNG EINER PROZESSGRÖßE EINES MEDIUMS UND ENTSPRECHENDE VORRICHTUNG**
METHOD FOR DETERMINING AND/OR MONITORING A PROCESS VARIABLE OF A MEDIUM, AND CORRESPONDING APPARATUS
PROCÉDÉ POUR DÉTERMINER ET/OU SURVEILLER UNE VARIABLE DE PROCESSUS D'UN FLUIDE, ET DISPOSITIF CORRESPONDANT

(30) Priorität: 20.02.2007 DE 102007008669
(43) Veröffentlichungstag der Anmeldung: 20.01.2010
(73) Patentinhaber: Endress+Hauser GmbH+Co. KG, 79689 Maulburg (DE)
(72) Erfinder: D'ANGELICO, Sascha, 79595 Rümmingen (DE); FERRARO, Franco, 79739 Schwörstadt (DE); MEIER, Jürgen, 79689 Maulburg (DE); MÜLLER, Alexander, 79361 Sasbach-Jechtingen (DE); ROMBACH, Walter, 79618 Rheinfelden (DE)
(74) Vertreter: Andres, Angelika Maria
(86) Internationale Anmeldenummer: PCT/EP2008/051703
(87) Internationale Veröffentlichungsnummer: WO 2008/101843

(56) Entgegenhaltungen:
- EP-A- 1 580 539
- DE-A1-102004 055 552
- DE-A1-102005 015 547
- DE-A1-102006 034 105
- US-A- 6 148 665
- US-A1- 2004 078 164
- US-A1- 2005 052 813
- US-A1- 2006 131 994

## Beschreibung

Die Erfindung bezieht sich auf ein Verfahren wie in Anspruch 1 definiert sich die Erfindung auf eine Vorrichtung wie in Anspruch 11 definiert.

Im Stand der Technik sind Messgeräte bekannt, bei denen eine sog. Schwinggabel oder ein Einstab oder eine Membran als mechanisch schwingfähige Einheit zu Schwingungen angeregt wird. Da die Schwingungen, bzw. deren Kenngrößen wie Frequenz, Amplitude und Phase abhängig sind vom Kontakt mit einem Medium bzw. von dessen Eigenschaften wie Dichte oder Viskosität, lässt sich aus den Kenngrößen der Schwingungen auf die Messgrößen rückschließen. Daher erlaubt ein solches Messgerät beispielsweise die Überwachung des Füllstandes oder die Messung der Dichte.

Es hat sich gezeigt, dass es Bereiche von Phasendifferenzen zwischen dem Anrege- und dem Empfangssignal gibt, in denen das Verhalten des Schwingsystems beeinflusst werden kann. So lässt sich das Dektektieren von Schaum ermöglichen oder unterdrücken. Weiterhin kann die Abhängigkeit der Schwingungen von Änderungen der Viskosität kompensiert werden (siehe DE 100 57 974 A1 und DE102005015547). Um diese Effekte zu erzielen, ist es jedoch erforderlich, dass die gewünschten Phasenwerte möglichst exakt eingestellt werden. Ein Problem besteht jedoch darin, dass die Messung der Phasen nicht immer optimal möglich ist.

Eine Aufgabe der Erfindung besteht darin, ein Verfahren zur Bestimmung bzw. Überwachung einer Prozessgröße anzugeben, bei welcher die Phasendifferenz zwischen dem Anrege- und dem Empfangssignal stets möglichst optimal eingestellt wird. Eine weitere Aufgabe ist, eine entsprechende Vorrichtung vorzuschlagen.

Die Aufgabe wird erfindungsgemäß gelöst durch ein Verfahren, welches vorsieht, dass mindestens ein Kriterium für die Beurteilung der Bestimmung der Phasendifferenz zwischen dem Anregesignal und dem Empfangssignal oder einem vom Anregesignal oder vom Empfangssignal abhängigen Signal vorgegeben wird, dass in dem Fall, dass das Kriterium für die Beurteilung der Bestimmung der Phasendifferenz erfüllt wird, die Einstellung der Phasendifferenz geregelt wird, und dass in dem Fall, welcher alternativ zu dem Fall ist, dass das Kriterium für die Beurteilung der Bestimmung der Phasendifferenz erfüllt wird, die Einstellung der Phasendifferenz gesteuert wird.

Bei der Regelung nimmt das Ergebnis (Ausgangsgröße) über eine Rückführung Einfluss auf die Stellgröße. D.h. es findet im Gegensatz zur Steuerung eine Rückkopplung bzw. Rückführung statt. Man spricht deshalb auch von einem geschlossenen Regelkreis. Dahingegen hat die Steuerung keine Rückführung. Eine Steuerung berücksichtigt nicht den Ausgangswert bzw. Zustand der zu steuernden Größe. Aufgrund der unterbrochenen Rückführung der IST-Größe, wird in der Regelungstechnik von einem offenen Regelkreis gesprochen.

Im erfindungsgemäßen Verfahren wird die Phasendifferenz zwischen dem Anregesignal und dem Empfangssignal in dem Fall geregelt, dass die Bestimmung der Phasendifferenz zwischen dem Anregesignal oder dem Empfangssignal oder einem vom Anregesignal oder vom Empfangssignal abhängigen Signal einem vorgebbaren Kriterium genügt. Das Kriterium dient somit dazu, festzustellen, ob die Phasendifferenz so genau bestimmt werden kann, dass damit eine Regelung der Einstellung der Phasendifferenz möglich ist. Ist das Kriterium nicht erfüllt, d.h. liegt der zum vorhergehenden Fall alternative Fall vor, so ist die Bestimmung der Phasendifferenz qualitativ nicht ausreichend genug, um damit eine Regelung durchzuführen, weshalb eine Steuerung vorgenommen wird. Hierfür werden vorzugsweise hinterlegte Daten verwendet.

Oder mit anderen Worten: Lässt sich die Phasendifferenz zuverlässig bestimmen, so wird die Einstellung der Differenz geregelt. Ist die Bestimmung der Phasendifferenz nicht präzise genug, so wird die Einstellung der Phasendifferenz gesteuert.

Eine Ausgestaltung des erfindungsgemäßen Verfahrens sieht vor, dass die Einstellung der Phasendifferenz solange geregelt wird, bis die Phasendifferenz im Wesentlichen gleich dem vorgebbaren Phasenwert ist. D.h. ausgehend von der wiederholten Bestimmung der Phasendifferenz wird eine Stellgröße, beispielsweise ein Zugriff auf einen Phasenschieber in der Rückkoppelelektronik, solange verändert, bis die Phasendifferenz dem angestrebten Phasenwert entspricht.

Eine Ausgestaltung des erfindungsgemäßen Verfahrens beinhaltet, dass mindestens eine Kenngröße des Anregesignals und/oder des Empfangssignals und/oder eines vom Anregesignal und/oder vom Empfangssignal abhängigen Signals für die Steuerung verwendet wird. Es wird also zumindest eine Kenngröße zumindest eines Signals bestimmt und ausgehend von der Kenngröße und in Verbindung mit bekannten Steuergrößen wird dann die Einstellung der Phasendifferenz passend gesteuert. So wird beispielsweise die Frequenz des Anregungssignals als Maß für die Phasendifferenz genommen, um in Abhängigkeit von den hinterlegten Daten z.B. einen Phasenschieber passend einzustellen.

Eine Ausgestaltung des erfindungsgemäßen Verfahrens sieht vor, dass das Empfangssignal zu einem vorverstärkten Signal vorverstärkt wird, und dass die Phasendifferenz zwischen dem Anregesignal und dem vorverstärkten Signal bestimmt und geregelt oder gesteuert wird. In dieser Ausgestaltung wird nicht das Empfangssignal für die Regelung bzw. Steuerung oder für die Bestimmung der Phasendifferenz verwendet, sondern das Empfangssignal wird zunächst zu einem vorverstärkten Signal verstärkt, und dieses vorverstärkte bzw. auch geglättete Signal wird dann für die Bestimmung der Phasendifferenz herangezogen.

Eine Ausgestaltung des erfindungsgemäßen Verfahrens beinhaltet, dass für die Steuerung der Einstellung der Phasendifferenz die Frequenz des Anregungssignals und/oder des Empfangssignals und/oder des vorverstärkten Signals verwendet wird. Für die Steuerung ist es erforderlich, dass wenigstens eine Kenngröße der einzustellenden Signale bekannt ist. Entsprechend dieser Kenngröße und ausgehend von den hinterlegten Daten werden dann die Stellgrößen oder wird die Stellgröße passend verändert, so dass der gewünschte Effekt eintreten sollte, d.h. dass die Phase gleich dem vorgebbaren Wert ist. In diesem Fall wird eine Frequenz mindestens eines der beteiligten Signale für die Steuerung herangezogen.

Eine Ausgestaltung des erfindungsgemäßen Verfahrens sieht vor, dass für die Steuerung der Einstellung der Phasendifferenz Daten, welche bei der Fertigung erzeugt und hinterlegt werden, und/oder aktualisierte Daten verwendet werden. Vorzugsweise bei der Fertigung wird ein erster Satz an Daten für die Steuerung der Einstellung der Phasendifferenz erzeugt und passend in dem Messgerät hinterlegt. In einer weiteren Variante werden diese Daten bei einer Installation des Messgerätes Vorort, d.h. vor der ersten Inbetriebnahme erzeugt und hinterlegt. Die Aktualisierung der Daten wird vorzugsweise während des Betriebs des Messgerätes, d.h. beispielsweise im eingebauten Zustand, d.h. somit auch mit den realen Prozessdaten vorgenommen.

Eine Ausgestaltung des erfindungsgemäßen Verfahrens beinhaltet, dass in dem Fall, dass das Kriterium für die Beurteilung der Bestimmung der Phasendifferenz erfüllt wird, die Daten für die Regelung mit den für die Steuerung der Einstellung der Phasendifferenz hinterlegten und/oder aktualisierten Daten verglichen werden und dass bei einer Abweichung außerhalb eines vorgegebenen Grenzwertes die Daten für die Steuerung durch die neu gewonnenen Daten aktualisiert und hinterlegt werden. In dieser Ausgestaltung wird also eine Adaption der Steuerdaten vorgenommen. Ist das Kriterium für eine zuverlässige Phasendifferenzbestimmung erfüllt, d.h. ist eine Regelung möglich, so werden die Einstellgrößen, welche sich aus der Regelung ergeben, mit den für diesen Zustand für die Steuerung hinterlegten Daten verglichen. Ergibt sich eine Abweichung zwischen den Werten, was beispielsweise Folge eines Alterungsprozesses im Messgerät sein kann, so werden die hinterlegten Daten bzw. bereits ggf. vorher aktualisierten Daten durch die neuen, aus der Regelung gewonnen Daten aktualisiert, d.h. ab diesem Regelungszeitpunkt werden für die folgenden Steuerungen die aktualisierten Daten verwendet.

Eine Ausgestaltung des erfindungsgemäßen Verfahrens beinhaltet, dass die neu gewonnenen Daten und die hinterlegten Daten in Hinsicht auf Predictive Maintenance ausgewertet werden. Aus der Entwicklung der Daten für die Steuerung wird somit versucht, eine Tendenz zu erkennen und Entwicklungen ggf. vorauszusehen.

Eine Ausgestaltung des erfindungsgemäßen Verfahrens sieht vor, dass in vorgegebenen Zeitabständen die Daten für die Steuerung der Einstellung der Phasendifferenz automatisch erzeugt werden. Alternativ geschieht dies durch einen Steuerbefehl. Dafür werden passende Werte erzeugt, das Verhalten wird ausgewertet und die Steuerdaten werden abgelegt.

Eine Ausgestaltung des erfindungsgemäßen Verfahrens beinhaltet, dass eine Schwinggabel oder ein Einstab oder eine Membran als mechanisch schwingfähige Einheit mit dem Anregesignal beaufschlagt wird.

Eine Ausgestaltung des erfindungsgemäßen Verfahrens sieht vor, dass ein Rohr, in welchem sich das Medium zumindest zeitweise befindet, als mechanisch schwingfähige Einheit mit dem Anregesignal beaufschlagt wird.

Eine Ausgestaltung des erfindungsgemäßen Verfahrens sieht vor, dass mindestens die Dichte oder der Füllstand oder die Viskosität oder der Durchfluss des Mediums bestimmt und/oder überwacht wird.

Weiterhin löst die Erfindung die Aufgabe bezüglich der Vorrichtung dadurch, dass in der Elektronikeinheit mindestens eine Phasenmesseinheit vorgesehen ist, dass in der Elektronikeinheit mindestens ein einstellbarer Phasenschieber vorgesehen ist, und dass in der Elektronikeinheit mindestens eine Phaseneinstelleinheit vorgesehen ist.

Eine Ausgestaltung der erfindungsgemäßen Vorrichtung sieht vor, dass die Phaseneinstelleinheit derartig ausgestaltet ist, dass die Phaseneinstelleinheit die Qualität mindestens einer von der Phasenmesseinheit vorgenommenen Messung einer Phase eines elektrischen Signals oder einer Phasendifferenz zwischen zwei Signalen beurteilt und dass die Phaseneinstelleinheit ausgehend von der Beurteilung die Einstellung einer Phasendifferenz zwischen dem Anregesignal oder einem vom Anregesignal abhängigen Signal und dem Empfangssignal oder einem vom Empfangssignal abhängigen Signal unter Verwendung des Phasenschiebers entweder regelt oder steuert. Für die Regelung der Einstellung einer Phasendifferenz ist es erforderlich, dass zumindest eine Phase hinlänglich genau messbar ist. Somit wird in dieser Ausgestaltung mindestens eine Messung mindestens einer Phase qualitativ beurteilt und ausgehend von der Beurteilung wird die Einstellung der Phasendifferenz entweder durch eine Regelung oder durch eine Steuerung vorgenommen. Alternativ wird die Qualität der Messung der Phasendifferenz zur Entscheidung, ob eine Regelung oder Steuerung stattfindet, herangezogen.

Eine Ausgestaltung der erfindungsgemäßen Vorrichtung beinhaltet, dass die Phaseneinstelleinheit anhand mindestens eines vorgebbaren Kriteriums die Qualität mindestens einer von der Phasenmesseinheit vorgenommenen Messung einer Phase eines elektrischen Signals oder einer Phasendifferenz zwischen zwei Signalen beurteilt. Eine Kriterium ist beispielsweise für die Beurteilung von zwei Phasenmessungen, ob die beiden Signale, von welchem jeweils die Phase bestimmt werden soll, die gleiche Frequenz und/oder die gleiche Kurvenform und/oder das gleiche Signal-Pause-Verhältnis aufweisen. Ein Kriterium für die Beurteilung der Messung der Phase eines Signals ist, ob die Phasenwerte, welche sich aus den ansteigenden bzw. absteigenden Flanken ergeben, jeweils gleich sind.

Eine Ausgestaltung der erfindungsgemäßen Vorrichtung sieht vor, dass mindestens eine Speichereinheit vorgesehen ist, in welcher Daten für die Steuerung der Einstellung der Phasendifferenz hinterlegbar sind.

Eine Ausgestaltung der erfindungsgemäßen Vorrichtung beinhaltet, dass die Phaseneinstelleinheit derartig ausgestaltet ist, dass die Phaseneinstelleinheit in dem Fall, dass die Messung der Phase oder der Phasendifferenz das vorgebbare Kriterium erfüllt, die Einstellung der Phasendifferenz unter Verwendung des Phasenschiebers regelt und dass die Phaseneinstelleinheit im alternativen Fall die Einstellung der Phasendifferenz unter Verwendung des Phasenschiebers steuert.

Eine Ausgestaltung der erfindungsgemäßen Vorrichtung sieht vor, dass die Phaseneinstelleinheit in dem Fall, dass die Phaseneinstelleinheit die Einstellung der Phasendifferenz regelt, die für die Regelung erforderlichen Parameter mit den für die Steuerung hinterlegten Daten vergleicht und im Falle einer Abweichung über einen vorgegebenen Grenzwert hinaus die Daten für die Steuerung aktualisiert. Die ersten Daten für eine Steuerung werden beispielsweise bei der Fertigung gewonnen und passend hinterlegt. Durch Alterungsprozesse oder durch Auswirkungen von Temperatur, Druck etc. auf das Messgerät kann es zu Veränderungen kommen, so dass die Steuerdaten nicht mehr passend sind. Dafür wird in dieser Ausgestaltung ein adaptives Lernen vorgenommen, indem in den Fällen, in welchen eine Regelung möglich sind, die sich ergebenden Einstellwerte mit den hinterlegten Steuerdaten verglichen werden und indem bei einer Abweichung über einen Grenzwert hinaus die Steuerdaten aktualisiert werden. In einer weiteren Ausgestaltung wird der Vergleich zwischen den hinterlegten Daten mit den jeweils aktuellen für ein Predictive Maintenance verwendet.

Eine Ausgestaltung der erfindungsgemäßen Vorrichtung beinhaltet, dass mindestens ein Kriterium zur Beurteilung der Messung der Phasendifferenz ist, dass beide Signale die gleiche Frequenz und/oder das gleiche Signal-Pausen-Verhältnis und/oder die gleiche Signalform aufweisen.

Die Erfindung wird anhand der nachfolgenden Zeichnungen näher erläutert. Es zeigt:
Fig. 1: eine schematische Darstellung eines Messgerätes, und
Fig. 2: ein detailliertes Blockschaltbild der Elektronikeinheit eines Messgerätes.

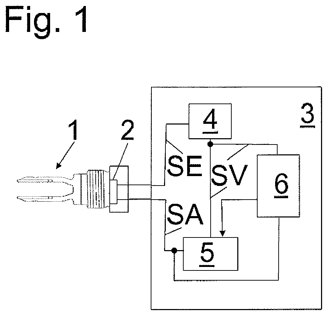

In der Fig. 1 ist schematisch ein erfindungsgemäßes Messgerät dargestellt, mit welchem das erfindungsgemäße Verfahren durchgeführt wird. Zu sehen ist eine so genannte Schwinggabel, welche als mechanisch schwingfähige Einheit 1 dient. Die Schwinggabel 1 wird von einer Antriebs-/Empfangseinheit 2 zu mechanischen Schwingungen angeregt bzw. von der Antriebs-/Empfangseinheit 2 werden die mechanischen Schwingungen empfangen und vorzugsweise passend in ein elektrisches Signal umgewandelt. Beispielsweise handelt es sich bei der Antriebs-/Empfangseinheit 2 um ein so genanntes piezoelektrisches Element, durch welches eine Umwandlung zwischen mechanischer Schwingung und elektrischer Wechselspannung stattfindet. Die Antriebs-/Empfangseinheit 2 ist mit einer Elektronikeinheit 3 verbunden, welche für die Rückkopplung sorgt. Weiterhin empfängt die Elektronikeinheit 3 von der Antriebs-/Empfangseinheit 2 das Empfangssignal SE und wertet dies in Bezug auf die zu bestimmenden und/oder zu überwachenden Prozessgröße aus bzw. verarbeitet es passend weiter. Bei der Prozessgröße handelt es sich beispielsweise um Füllstand, Dichte, Viskosität, Durchflussmenge oder-geschwindigkeit des Mediums, bei welchem es sich wiederum um eine Flüssigkeit oder um ein Schüttgut oder allgemein um ein Fluid handelt. Das Medium und der Behälter, in welchem sich vorzugsweise das Medium befindet, sind hier nicht dargestellt. In einer weiteren Ausgestaltung befindet sich das Medium in einem Rohr, welches in einer weiteren Ausgestaltung die mechanisch schwingfähige Einheit selbst ist.

Die Elektronikeinheit 3 ist hier auf die für die Beschreibung der Erfindung wesentlichen Bestandteile reduziert. Die Elektronikeinheit 3 verfügt zunächst über eine Vorverarbeitungseinheit 4, welcher das Empfangssignal SE zugeht. Die Vorverarbeitungseinheit 4 filtert vorzugsweise das Empfangssignal SE und unterzieht es einer ersten Verstärkung. Hieraus ergibt sich dann das vorverstärkte Signal SV. Dieses Signal SV geht auf die Endverarbeitungseinheit 5, welche das eigentliche Ausgangssignal SA erzeugt. Dies beinhaltet unter anderem, dass das Signal auf die endgültige Verstärkung angehoben wird. Insbesondere wird hier jedoch auch darauf geachtet, dass das Anregungssignal SA gegenüber dem Empfangssignal SE eine spezielle Phasendifferenz aufweist. Wichtig ist diese Phasendifferenz beispielsweise dafür, dass so Abhängigkeiten der Schwingungen von einigen Prozessgrößen verhindert werden können. So ist es beispielsweise für die Bestimmung und/oder Überwachung der Dichte notwendig, dass die Abhängigkeit der Schwingungen resp. der Schwingungsfrequenz von der Viskosität bzw. von der Viskositätsänderung unterdrückt wird.

Um diese Phasendifferenz, welche passend vorzugeben ist, genau einzustellen, ist die Phaseneinstelleinheit 6 vorgesehen. Der Phaseneinstelleinheit 6 gehen das vorverstärkte Signal SV und das Ausgangssignal SA zu. Die Phaseneinstelleinheit 6 bestimmt dann aus diesen beiden Signalen die Phasendifferenz und regelt bzw. steuert über einen Zugriff auf die Endverarbeitungseinheit 5 diese Phasendifferenz solange, bis der gewünschte bzw. vorgegebene Phasenwert erreicht ist. Um die Phase zu verändern, ist beispielsweise ein Phasenschieber in der Endverarbeitungseinheit 5 vorgesehen.

Für die Qualität der Bestimmung der Phasendifferenz ist erfindungsgemäß mindestens ein Kriterium vorgegeben, wobei es sich beispielsweise darum handelt, dass festgestellt wird, ob das vorverstärkte Signal SV und das Ausgangssignal SA die gleiche Frequenz aufweisen, ob sie die gleiche Kurvenform aufweisen bzw. ob das Signal-Pause-Verhältnis bei beiden gleich ist. Ein weiteres Kriterium ist beispielsweise auch, ob die Phasendifferenz, welche sich aus den ansteigenden bzw. absteigenden Flanken ergeben, jeweils gleich sind. Wesentlich ist hier jedoch nur, dass solche Kriterien vorgegeben werden, welche eine Aussage darüber geben können, ob die Phasenbestimmung derartig zuverlässig ist, so dass eine Regelung der Phasendifferenz effektiv sein kann.

Sind diese Kriterien bzw. ist, wenn die Teilkriterien in einem Kriterium zusammengefasst sind, das Kriterium erfüllt, so wird die Regelung der Phasendifferenz vorgenommen, indem beispielsweise die Phaseneinstelleinheit 6 passend auf die Endverarbeitungseinheit 5 einwirkt und die Änderungen an der Endverarbeitungseinheit 5 solange vornimmt, bis die Phasendifferenz gleich dem vorgegebenen Phasenwert entspricht. Eine Regelung beschreibt hier den Fall, dass eine Stellgröße - diese ist entsprechend in der Endverarbeitungseinheit 5 gegeben - solange verändert wird, bis die zu regelnde Größe - dies ist hier die Phasendifferenz - gleich einem Sollwert ist bzw. bis die Differenz zwischen dem Ist- und dem Sollwert im Wesentlichen gleich Null ist.

Ist mindestens ein Teilkriterium oder ist das Kriterium nicht erfüllt, so wird die Einstellung der Phasendifferenz über eine Steuerung vorgenommen. Für die Steuerung ist beispielsweise eine Frequenzphasenkurve der Endverarbeitungseinheit 5 passend in der Phaseneinstelleinheit 6 hinterlegt. Dies bedeutet, dass aus der Frequenz des Anregesignals SA darauf geschlossen werden kann, welche Änderungen an der Endverarbeitungseinheit 5 vorzunehmen sind, so dass bei der gegebenen Frequenz die gewünschte Phase erzielt wird. Als Frequenz bietet sich die Frequenz des Empfangssignals SE, des vorverstärkten Signals SV und/oder des Anregesignals SA an. Da das Anregungssignal SA in den meisten Fällen das amplitudenstärkste Signal ist, ist vorzugsweise die Frequenz dieses Signals zu verwenden.

Eine weitere Ausgestaltung bezieht sich darauf, dass die Daten zur Steuerung der Phasendifferenz möglichst optimal sein sollten. Ein erster Satz an Daten bzw. Informationen für die Steuerung wird vorzugsweise bei der Fertigung des Messgerätes aufgenommen. In einer Ausgestaltung misst der Mikrocontroller des Messgerätes den gesamten Regelkreis selbst aus, indem er ein bekanntes Frequenzband durchläuft und die benötigten Steuerungsparameter aus dem Regelkreis misst bzw. ermittelt. Dies kann eventuell auch während des normalen Betriebs geschehen. Ggf. erforderlich dafür sind ausreichend Rechenleistung bzw. Zeit und zwei umschaltbare Schwingkreise. An einem Schwingkreis ist der Sensor adaptiert, der andere Schwingkreis wird ausgemessen - und das ganze geschieht im Wechsel. Redundante Schwingkreise sind dann sinnvoll, wenn es um Sicherheitsanwendungen geht.

Durch Alterungseffekte oder beispielsweise durch Auswirkung des Mediums auf die mechanisch schwingfähige Einheit 1 bzw. durch Prozessgrößen, wie Temperatur und deren Auswirkung auf die Elektronikeinheit 3 kann es zu Änderungen an den einzelnen Bauteilen kommen. Um diese Alterungserscheinungen bei der Steuerung in Betracht zu ziehen, werden die Steuerungsdaten vorzugsweise bei der Anwendung des Feldgerätes, d.h. beim bereits im Prozess eingebauten Messgerät aktualisiert. Hierfür werden in den Fällen, dass die Regelung möglich ist, d.h. dass die passenden Kriterien für die Begutachtung der Phasendifferenz erfüllt sind, die Regelungsdaten passend mit den diesbezüglichen Steuerungsdaten verglichen und bei Abweichungen außerhalb eines vorgebbaren Grenzwertes werden die Steuerungsdaten an die gegebenen Regelungsdaten adaptiert. Für die Anwendung der Steuerungsdaten werden anschließend ggf. die Ausgleichskurven oder Approximationen passend an die neuen Kennwerte adaptiert.

Ein Vergleich der bestehenden bzw. hinterlegten Daten mit den aktualisierten Daten wird in einer Ausgestaltung für ein Predictice Maintenance verwendet, d.h. aus den Änderungen der Steuerdaten wird auf die Änderungen des Messgerätes geschlossen und es werden auch vorausschauende Überlegungen bzgl. des möglichen weiteren Verhaltens des Messgerätes angestellt.

In einer weiteren Ausgestaltung werden in zeitlichen Abständen und/oder durch auslösende Situationen die Daten für die Steuerung automatisch eingelesen und allgemein ermittelt. D.h. automatisch wird der komplette Datensatz für die Steuerung erzeugt. Dies geschieht beispielsweise dadurch, dass ein Mikrocontroller ein Frequenzband ausgibt und die Phase dabei mitprotokolliert.

Das Messgerät mit dem erfindungsgemäßen Verfahren ist somit derartig ausgestaltet, dass in den Fällen, dass die einzelnen Signale eine gute Qualität aufweisen, bzw. dass eine Bestimmung der Phasendifferenz zuverlässig möglich ist, die Einstellung der Phasendifferenz durch eine Regelung vorgenommen wird, und dass in den Fällen, dass die Phasendifferenz nicht genau oder nicht sicher genug bestimmt werden kann, eine Steuerung vorgenommen wird. Für die Steuerung werden dafür hinterlegte Daten oder Informationen bezüglich der Elektronikeinheit verwendet. In einem weiteren Schritt werden diese Steuerdaten passend in der Anwendung des Messgerätes adaptiert bzw. aktualisiert. Dieses adaptive Lernen wird in einer weiteren Ausgestaltung für die vorausschauende Wartung (Predictive Maintenance) des Messgerätes verwendet.

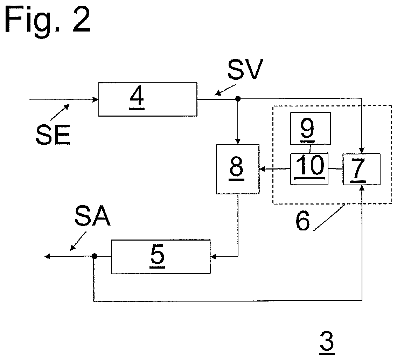

In der Fig. 2 ist schematisch als Blockschaltbild eine detaillierte Darstellung der Elektronikeinheit 3 des Messgerätes dargestellt. Das Empfangssignal SE wird zunächst durch eine Vorverarbeitungseinheit, welche beispielsweise in Form einer Filterstufe ausgeführt ist, gefiltert und dabei vorverstärkt, so dass sich das vorverstärkte Signal SV ergibt. Dieses vorverstärkte Signal SV wird hier der Phaseneinstelleinheit 6 zugeführt, in welcher sich eine Phasenmesseinheit 7 befindet. Die einzelnen Komponenten der Phaseneinstelleinheit 6 können in anderen Ausgestaltungen eigenständige Einheiten sein bzw. sind in einer zusätzlichen Ausgestaltung als Funktionen in einem Mikrocontroller hinterlegt. Diese Phasenmesseinheit 7 bestimmt, wenn möglich, aus dem vorverstärkten Signal SV die Phase. Das vorverstärkte Signal SV gelangt weiterhin zu einem Allpass, welcher hier als Phasenschieber 8 verwendet wird. Nach dem Passieren des Allpasses 8 bzw. nachdem die passende Phase eingestellt wurde, gelangt das so phasenverschobene vorverstärkte Signal SV zu einer Endverarbeitungseinheit 5 bzw. beispielsweise speziell zu einem Endverstärker, welcher das eigentliche Anregesignal SA erzeugt, welches wiederum auf die mechanisch schwingfähige Einheit bzw. auf dessen Antriebs-/Empfangseinheit gegeben wird und somit die weiteren Schwingungen erzeugt.

Das Anregesignal SA wird ebenfalls der Phaseneinstelleinheit 6 zugeleitet, so dass auch von diesem Signal die Phase bestimmt wird. Erfüllen beide Phasenbestimmungen die hinterlegten Qualitätskriterien, so lässt sich anhand der bestimmten Phasendifferenz die Einstellung der Differenz regeln. In dem alternativen Fall, dass das Kriterium nicht erfüllt wird, ist eine Regelung nicht mehr möglich und deshalb wird die Einstellung der Phasendifferenz vermittels des Phasenschiebers 8 gesteuert. Die dazu erforderlichen Steuerdaten sind in einer entsprechenden Speichereinheit 9 hinterlegt. Für die Steuerung wird beispielsweise die Frequenz des Anregesignals SA herangezogen, indem in der Speichereinheit die erforderliche Frequenz-Phasen-Kurve des Allpass hinterlegt ist.

Das heißt, im Falle der Steuerung wird die Frequenz des Anregesignal SA gemessen, es wird in der hinterlegten Tabelle bzw. in der hinterlegten funktionellen Abhängigkeit nachgeschaut und es wird entsprechend der Allpass als Phasenschieber angesteuert. Somit ist es also auch in dem Fall, dass die Signale, insbesondere das Empfangssignal SE oder das vorverstärkte Signal SV nicht die passende Qualität aufweisen, dennoch möglich, die Einstellung der Phase sehr genau vorzunehmen, so dass eine entsprechend für die Messung erforderliche Phasendifferenz eingestellt werden kann.

Die Daten für die Steuerung der Einstellung der Phasendifferenz werden beispielsweise über eine Ausgestaltung während der Fertigung des Messgeräts passend hinterlegt. In einer alternativen Ausgestaltung werden diese Steuerdaten beim frisch installierten Messgerät aufgenommen. Nachteilig an diesen fest hinterlegten Daten ist, dass Änderungen, wie sie durch die Anwendung des Gerätes bzw. durch die Auswirkungen des Mediums oder des Prozesses auf das Messgerät stattfinden können, nicht berücksichtigt werden. Daher wird in einer weiteren Ausgestaltung vorgesehen, dass das Messgerät bzw. hier die Phaseneinstelleinheit 6 in dem Fall, dass eine Regelung möglich ist, d.h. in dem Fall, dass die auftretenden Signale die Qualitätskriterien erfüllen, die sich aus der Regelung ergebenden Parameterdaten mit den für die Steuerung hinterlegten Daten verglichen werden und dass bei einer Abweichung der hinterlegten Daten von den aktuellen Daten, die hinterlegten Daten entsprechend aktualisiert werden. In dieser Ausgestaltung wird somit ein adaptives Lernen vorgenommen, so dass die Daten für die Steuerung mit der Zeit angepasst und somit optimiert werden. In einer zusätzlichen Ausgestaltung wird ausgehend von dem Vergleich der aktuellen mit den hinterlegten Daten eine vorausschauende Wartung betrieben.

### Bezugszeichenliste

**Tabelle 2**

| | |
|---|---|
| 1 | Mechanisch schwingfähige Einheit |
| 2 | Antriebs-/Empfangseinheit |
| 3 | Elektronikeinheit |
| 4 | Vorverarbeitungseinheit |
| 5 | Endverarbeitungseinheit |
| 6 | Phaseneinstelleinheit |
| 7 | Phasenmesseinheit |
| 8 | Phasenschieber |
| 9 | Speichereinheit |
| 10 | Mikrocontroller |

## Patentansprüche

1. Verfahren zur Bestimmung und/oder Überwachung mindestens einer Prozessgröße eines Mediums,
wobei mindestens eine mechanisch schwingfähige Einheit (1) mit einem Anregesignal (SA) beaufschlagt wird,
wobei mindestens ein von der mechanisch schwingfähigen Einheit (1) stammendes Empfangssignals (SE) empfangen wird,
wobei das Anregesignal (SA) derartig erzeugt wird, dass eine Phasendifferenz zwischen dem Anregesignal (SA) und dem Empfangssignal (SE) im Wesentlichen gleich einem vorgebbaren Phasenwert ist,
**dadurch gekennzeichnet,**
**dass** mindestens ein vorgebbares Kriterium für die Beurteilung der Qualität der Bestimmung der Phasendifferenz zwischen dem Anregesignal (SA) und dem Empfangssignal (SE) oder einem vom Anregesignal (SA) oder vom Empfangssignal (SE) abhängigen Signal vorgegeben wird,
**dass** in dem Fall, dass das Kriterium für die Beurteilung der Bestimmung der Phasendifferenz erfüllt wird, die Einstellung der Phasendifferenz geregelt wird, und
**dass** in dem Fall, welcher alternativ zu dem Fall ist, dass das Kriterium für die Beurteilung der Bestimmung der Phasendifferenz erfüllt wird, die Einstellung der Phasendifferenz gesteuert wird.

2. Verfahren nach Anspruch 1,
**dadurch gekennzeichnet,**
**dass** die Einstellung der Phasendifferenz solange geregelt wird, bis die Phasendifferenz im Wesentlichen gleich dem vorgebbaren Phasenwert ist.

3. Verfahren nach Anspruch 1 oder 2,
**dadurch gekennzeichnet,**
**dass** mindestens eine Kenngröße des Anregesignals (SA) und/oder des Empfangssignals (SE) und/oder eines vom Anregesignal (SA) und/oder vom Empfangssignal (SE) abhängigen Signals für die Steuerung verwendet wird.

4. Verfahren nach mindestens einem der Ansprüche 1 bis 3,
**dadurch gekennzeichnet,**
**dass** das Empfangssignal (SE) zu einem vorverstärkten Signal (SV) vorverstärkt wird,
und
**dass** die Phasendifferenz zwischen dem Anregesignal (SA) und dem vorverstärkten Signal (SV) bestimmt und geregelt oder gesteuert wird.

5. Verfahren nach mindestens einem der Ansprüche 1 bis 4,
**dadurch gekennzeichnet,**
**dass** für die Steuerung der Einstellung der Phasendifferenz die Frequenz des Anregungssignals (SA) und/oder des Empfangssignals (SE) und/oder des vorverstärkten Signals (SV) verwendet wird.

6. Verfahren nach mindestens einem der Ansprüche 1 bis 5,
**dadurch gekennzeichnet,**
**dass** für die Steuerung der Einstellung der Phasendifferenz Daten, welche bei der Fertigung erzeugt und hinterlegt werden, und/oder aktualisierte Daten verwendet werden.

7. Verfahren nach Anspruch 6,
**dadurch gekennzeichnet,**
**dass** in dem Fall, dass das Kriterium für die Beurteilung der Bestimmung der Phasendifferenz erfüllt wird, die Daten für die Regelung mit den für die Steuerung der Einstellung der Phasendifferenz hinterlegten und/oder aktualisierten Daten verglichen werden und dass bei einer Abweichung außerhalb eines vorgegebenen Grenzwertes die Daten für die Steuerung durch die neu gewonnenen Daten aktualisiert und hinterlegt werden.

8. Verfahren nach Anspruch 7,
**dadurch gekennzeichnet,**
**dass** die neu gewonnenen Daten und die hinterlegten Daten in Hinsicht auf Predictive Maintenance ausgewertet werden.

9. Verfahren nach mindestens einem der Ansprüche 6 bis 8,
**dadurch gekennzeichnet,**
**dass** in vorgegebenen Zeitabständen die Daten für die Steuerung der Einstellung der Phasendifferenz automatisch erzeugt werden.

10. Verfahren nach mindestens einem der Ansprüche 1 bis 9,
**dadurch gekennzeichnet,**
**dass** mindestens die Dichte oder der Füllstand oder die Viskosität oder der Durchfluss des Mediums bestimmt und/oder überwacht wird.

11. Vorrichtung zur Bestimmung und/oder Überwachung mindestens einer Prozessgröße eines Mediums,
mit mindestens einer mechanisch schwingfähigen Einheit (1),
mit mindestens einer Antriebs-/Empfangseinheit (2), welche die mechanisch schwingfähige Einheit (1) zu mechanischen Schwingungen anregt und welche die mechanischen Schwingungen der mechanisch schwingfähigen Einheit (1) empfängt, und
mit mindestens einer Elektronikeinheit (3), welche die Antriebs-/Empfangseinheit (2) mit einem elektrischen Anregesignal (SA) beaufschlagt und welche von der Antriebs-/Empfangseinheit (2) ein elektrisches Empfangssignals (SE) empfängt,
**dadurch gekennzeichnet,**
**dass** in der Elektronikeinheit (3) mindestens eine Phasenmesseinheit (7) vorgesehen ist,
**dass** in der Elektronikeinheit (3) mindestens ein einstellbarer Phasenschieber (8) vorgesehen ist,
**dass** in der Elektronikeinheit (3) mindestens eine Phaseneinstelleinheit (6) vorgesehen ist,
**dass** die Phaseneinstelleinheit (6) derartig ausgestaltet ist, dass die Phaseneinstelleinheit (6) anhand mindestens eines vorgebbaren Kriteriums die Qualität mindestens einer von der Phasenmesseinheit (7) vorgenommenen Messung einer Phase eines elektrischen Signals (SA, SE, SV) oder einer Phasendifferenz zwischen zwei Signalen (SA, SE, SV) beurteilt und dass die Phaseneinstelleinheit (6) ausgehend von der Beurteilung die Einstellung einer Phasendifferenz zwischen dem Anregesignal (SA) oder einem vom Anregesignal (SA) abhängigen Signal (SV) und dem Empfangssignal (SE) oder einem vom Empfangssignal (SE) abhängigen Signal unter Verwendung des Phasenschiebers (8) entweder regelt oder steuert.

12. Vorrichtung nach Anspruch 11,
**dadurch gekennzeichnet,**
**dass** mindestens eine Speichereinheit (9) vorgesehen ist, in welcher Daten für die Steuerung der Einstellung der Phasendifferenz hinterlegbar sind.

13. Vorrichtung nach Anspruch 11 oder 12,
**dadurch gekennzeichnet,**
**dass** die Phaseneinstelleinheit (6) derartig ausgestaltet ist, dass die Phaseneinstelleinheit (6) in dem Fall, dass die Messung der Phase oder der Phasendifferenz das vorgebbare Kriterium erfüllt, die Einstellung der Phasendifferenz unter Verwendung des Phasenschiebers (8) regelt und dass die Phaseneinstelleinheit im alternativen Fall die Einstellung der Phasendifferenz unter Verwendung des Phasenschiebers (8) steuert.

14. Vorrichtung nach Anspruch 13,
**dadurch gekennzeichnet,**
**dass** die Phaseneinstelleinheit (6) in dem Fall, dass die Phaseneinstelleinheit (6) die Einstellung der Phasendifferenz regelt, die für die Regelung erforderlichen Parameter mit den für die Steuerung hinterlegten Daten vergleicht und im Falle einer Abweichung über einen vorgegebenen Grenzwert hinaus die Daten für die Steuerung aktualisiert.

15. Vorrichtung nach Anspruch 13,
**dadurch gekennzeichnet,**
**dass** mindestens ein Kriterium zur Beurteilung der Messung der Phasendifferenz ist, dass beide Signale die gleiche Frequenz und/oder das gleiche Signal-Pausen-Verhältnis und/oder die gleiche Signalform aufweisen.

## Claims

1. Procedure for determining and/or monitoring at least one process variable of a medium,
wherein at least one unit capable of mechanical vibration (1) is exposed to an excitation signal (SA),
wherein at least one reception signal (SE) coming from the unit capable of mechanical vibration (1) is received,
wherein the excitation signal (SA) is generated in such a way that a phase difference between the excitation signal (SA) and the reception signal (SE) is essentially equal to a predefinable phase value,
**characterized in that**
at least one predefinable criterion is specified for assessing the quality of the determination of the phase difference between the excitation signal (SA) and the reception signal (SE) or a signal that depends on the excitation signal (SA) or the reception signal (SE),
**in that** if the criterion for assessing the quality of the determination of the phase difference is satisfied, the setting for the phase difference is regulated,
and
**in that** in the case that is alternative to the case where the criterion for assessing the quality of the determination of the phase difference is satisfied, the setting for the phase difference is controlled.

2. Procedure as claimed in Claim 1,
**characterized in that**
the setting for the phase difference is regulated until the phase difference is essentially equal to the predefinable phase value.

3. Procedure as claimed in Claim 1 or 2,
**characterized in that**
at least one characteristic value of the excitation signal (SA) and/or of the reception signal (SE) and/or of a signal that depends on the excitation signal (SA) and/or of the reception signal (SE) is used for the control.

4. Procedure as claimed in at least one of the Claims 1 to 3,
**characterized in that**
the reception signal (SE) is preamplified to a preamplified signal (SV),
and
**in that** the phase difference between the excitation signal (SA) and the preamplified signal (SV) is determined and regulated or controlled.

5. Procedure as claimed in at least one of the Claims 1 to 4,
**characterized in that**
the frequency of the excitation signal (SA) and/or of the reception signal (SE) and/or of the preamplified signal (SV) is used to control the setting for the phase difference.

6. Procedure as claimed in at least one of the Claims 1 to 5,
**characterized in that**
data that are generated and saved during the production process and/or updated data are used to control the setting for the phase difference.

7. Procedure as claimed in Claim 6,
**characterized in that**
in the case that the criterion for assessing the determination of the phase difference is satisfied, the data for the regulation are compared with the data saved and/or updated for the control of the setting of the phase difference, and **in that** in the event of a deviation beyond a predefined limit value the data for the control are updated with the newly acquired data and saved.

8. Procedure as claimed in Claim 7,
**characterized in that**
the newly acquired data and the saved data are evaluated with a view to predictive maintenance.

9. Procedure as claimed in at least one of the Claims 6 to 8,
**characterized in that**
the data for controlling the setting for the phase difference are generated automatically in predefined intervals.

10. Procedure as claimed in at least one of the Claims 1 to 9,
**characterized in that**
at least the density or the level or the viscosity or the flow of the medium is determined and/or monitored.

11. Apparatus for determining and/or monitoring at least one process variable of a medium,
with at least one unit capable of mechanical vibration (1),
with at least one drive/reception unit (2) that excites the unit capable of mechanical vibration (1) to perform mechanical vibrations, and which receives the mechanical vibrations of the unit capable of mechanical vibration (1),
And
with at least one electronics unit (3) which exposes the drive/reception unit (2) to an electrical excitation signal (SA) and which receives an electrical reception signal (SE) from the drive/reception unit (2),
**characterized in that**
at least one phase measuring unit (7) is provided in the electronics unit (3) at least one adjustable phase shifter (8) is provided in the electronics unit (3), at least one phase setting unit (6) is provided in the electronics unit (3),
the phase setting unit (6) is designed in such a way that the phase setting unit (6) assesses the quality of at least one measurement, performed by the phase measuring unit (7), of a phase of an electrical signal (SA, SE, SV) or of a phase difference between two signals (SA, SE, SV) using at least one predefinable criterion and **in that**, on the basis of the assessment, the phase setting unit (6) uses the phase shifter (8) to either regulate or control the setting of a phase difference between the excitation signal (SA) or a signal (SV) that depends on the excitation signal (SA) and the reception signal (SE) or a signal that depends on the reception signal (SE).

12. Apparatus as claimed in Claim 11,
**characterized in that**
at least one storage unit (9) is provided in which data can be stored for controlling the setting for the phase difference.

13. Apparatus as claimed in Claim 11 or 12,
**characterized in that**
the phase setting unit (6) is designed in such a way that in the event that the measurement of the phase or phase difference satisfies the predefinable criterion, the phase setting unit (6) regulates the setting for the phase difference using the phase shifter (8) and **in that**, in the alternative case, the phase setting unit controls the setting of the phase difference using the phase shifter (8).

14. Apparatus as claimed in Claim 13,
**characterized in that**
in the case that the phase setting unit (6) regulates the setting of the phase difference, the phase setting unit (6) compares the parameters that are required for the regulation with the data that are saved for the control and, in the event of a deviation beyond a predefined limit value, updates the data for the control.

15. Apparatus as claimed in Claim 13,
**characterized in that**
at least one criterion for assessing the measurement of the phase difference is that both signals have the same frequency and/or the same signal/pause ratio and/or the same signal shape.

## Revendications

1. Procédé destiné à la détermination et/ou la surveillance d'au moins une grandeur process d'un produit,
pour lequel au moins une unité mécanique apte à vibrer (1) est alimentée avec un signal d'excitation (SA),
pour lequel est reçu au moins un signal de réception (SE) provenant de l'unité mécanique apte à vibrer (1),
pour lequel le signal d'excitation (SA) est généré de telle sorte qu'une différence de phase entre le signal d'excitation (SA) et le signal de réception (SE) est pour l'essentiel égal à une valeur de phase prédéfinissable,
**caractérisé**
**en ce qu'**au moins un critère prédéfinissable est prédéfini pour l'évaluation de la qualité de la détermination de la différence de phase entre le signal d'excitation (SA) et le signal de réception (SE) ou un signal dépendant du signal d'excitation (SA) ou du signal de réception (SE),
**en ce que** pour le cas où le critère concernant l'évaluation de la détermination de la différence de phase est rempli, le réglage de la différence de phase est régulé, et
**en ce que**, dans le cas alternatif au cas où le critère concernant l'évaluation de la détermination de la différence de phase est rempli, le réglage de la différence de phase est commandé.

2. Procédé selon la revendication 1,
**caractérisé**
**en ce que** le réglage de la différence de phase est réglé jusqu'à ce que la différence de phase soit pour l'essentiel égale à la valeur de phase prédéfinissable.

3. Procédé selon la revendication 1 ou 2,
**caractérisé**
**en ce qu'**au moins une grandeur caractéristique du signal d'excitation (SA) et/ou du signal de réception (SE) et/ou d'un signal dépendant du signal d'excitation (SA) et/ou du signal de réception (SE) est utilisée pour la commande.

4. Procédé selon l'une des revendications 1 à 3,
**caractérisé**
**en ce que** le signal de réception (SE) est préamplifié en un signal préamplifié (SV),
et
**en ce que** la différence de phase entre le signal d'excitation (SA) et le signal préamplifié (SV) est déterminée et régulée ou commandée.

5. Procédé selon l'une des revendications 1 à 4,
**caractérisé**
**en ce qu'**est utilisée, pour la commande du réglage de la différence de phase, la fréquence du signal d'excitation (SA) et/ou du signal de réception (SE) et/ou du signal préamplifié (SV).

6. Procédé selon l'une des revendications 1 à 5,
**caractérisé**
**en ce que** sont utilisées, pour la commande du réglage de la différence de phase, des données qu sont générées et enregistrées lors de la fabrication, et/ou des données actualisées.

7. Procédé selon la revendication 6,
**caractérisé**
**en ce que** dans le cas où le critère concernant l'évaluation de la détermination de la différence de phase est rempli, les données pour la régulation sont comparées avec les données enregistrées et/ou actualisées pour la commande du réglage de la différence de phase, et en ce qu'en cas d'écart supérieur à un seuil prédéfini, les données pour la commande sont actualisées par les données nouvellement acquises et enregistrées.

8. Procédé selon la revendication 7,
**caractérisé**
**en ce que** les données nouvellement acquises et les données enregistrées sont exploitées en vue de la maintenance prédictive.

9. Procédé selon au moins l'une des revendications 6 à 8,
**caractérisé**
**en ce que** les données pour la commande du réglage de la différence de phase sont générées automatiquement selon des intervalles de temps prédéfinis.

10. Procédé selon au moins l'une des revendications 1 à 9,
**caractérisé**
**en ce qu'**au moins la densité ou le niveau ou la viscosité ou le débit du produit est déterminé et/ou surveillé.

11. Dispositif destiné à la détermination et/ou la surveillance d'au moins une grandeur process d'un produit,
avec au moins une unité mécanique apte à vibrer (1),
avec au moins une unité d'entraînement / de réception (2), laquelle excite l'unité mécanique apte à vibrer (1) en vibrations mécaniques et laquelle reçoit les vibrations mécaniques de l'unité mécanique apte à vibrer (1),
et
avec au moins une unité électronique (3), laquelle alimente l'unité d'entraînement / de réception (2) avec un signal d'excitation électrique (SA) et laquelle reçoit de l'unité d'entraînement / de réception (2) un signal de réception électrique (SE), **caractérisé**
**en ce qu'**est prévue dans l'unité électronique (3) au moins une unité de mesure de phase (7),
**en ce qu'**est prévu dans l'unité électronique (3) au moins un déphaseur réglable (8),
**en ce qu'**est prévue dans l'unité électronique (3) au moins une unité de réglage de phase (6),
**en ce que** l'unité de réglage de phase (6) est conçue de telle sorte que l'unité de réglage de phase (6) évalue sur la base d'au moins un critère prédéfinissable la qualité d'au moins une mesure, effectuée par l'unité de mesure de phase (7), d'une phase d'un signal électrique (SA, SE, SV) ou d'une différence de phase entre deux signaux (SA, SE, SV) et en ce que l'unité de réglage de phase (6), régule ou commande, en se basant sur l'évaluation, le réglage d'une différence de phase entre le signal d'excitation (SA) ou un signal (SV) dépendant du signal d'excitation (SA) et le signal de réception (SE) ou un signal dépendant du signal de réception (SE) en utilisant le déphaseur (8).

12. Dispositif selon la revendication 11,
**caractérisé**
**en ce qu'**est prévue au moins une unité de mémoire (9) dans laquelle peuvent être enregistrées des données pour la commande du réglage de la différence de phase.

13. Dispositif selon la revendication 11 ou 12,
**caractérisé**
**en ce que** l'unité de réglage de phase (6) est conçue de telle sorte que l'unité de réglage de phase (6) régule, dans le cas où la mesure de la phase ou de la différence de phase répond au critère prédéfinissable, le réglage de la différence de phase en utilisant le déphaseur (8) et en ce que l'unité de réglage de phase commande, dans le cas alternatif, le réglage de la différence de phase en utilisant le déphaseur (8).

14. Dispositif selon la revendication 13,
**caractérisé**
**en ce que** le l'unité de réglage de phase (6), dans le cas où l'unité de réglage de phase (6) régule le réglage de la différence de phase, compare les paramètres nécessaires pour la régulation avec les données enregistrées pour la commande et, dans le cas d'un écart supérieur à un seuil prédéfinissable, actualise les données pour la commande.

15. Dispositif selon la revendication 13,
**caractérisé**
**en ce qu'**il existe au moins un critère pour l'évaluation de la mesure de la différence de phase consistant à ce que les deux signaux présentent la même fréquence et/ou le même rapport signal/pause et/ou la même forme de signal.
